# FASCICULE DE BREVET EUROPEEN

(11) **EP 1 564 098 B1**
(45) Date de publication et mention de la délivrance du brevet: **03.01.2007**
(21) Numéro de dépôt: 04290354.2
(22) Date de dépôt: 11.02.2004
(51) Int. Cl.: B60T 13/72, B60T 13/52

(54) **Système de commande de freinage comportant un maître-cylindre et un amplificateur de force a différentiel de pression**
Bremssystem mit Geberzylinder und Unterdruckkraftverstärker
Brake system including a master cylinder and a double vacuum booster

(43) Date de publication de la demande: 17.08.2005
(73) Titulaire: Delphi Technologies, Inc., Troy, MI 48007 (US)
(72) Inventeur: Loche, Jacques, 92600 Asnieres (FR); Castel, Philippe, 78005 Paris (FR)
(74) Mandataire: Abello, Michel

(56) Documents cités:
- EP-A- 0 976 627
- GB-A- 1 423 109
- US-A- 5 924 508

## Description

La présente invention se rapporte aux systèmes de commande pour des freins de véhicule, du type comportant un maître-cylindre et un amplificateur de force à différentiel de pression.

Le document GB 1423109 est considére comme le plus proche état de la technique et montre un telle systeme de commande de frein.

Avec les systèmes de commande de ce type, l'exécution d'un freinage prend un certain temps. Par exemple, lorsque le conducteur a le pied posé sur la pédale d'accélérateur et qu'il doit soudainement effectuer un freinage d'urgence, il faut :
- quelques millisecondes pour décider de relever le pied de la pédale d'accélération,
- quelques centaines de millisecondes pour relever le pied de la pédale d'accélérateur, puis enfoncer la pédale de frein,
- le temps nécessaire pour vaincre les forces d'inertie et de rappel présentes dans l'amplificateur de force puis pour activer celui-ci par l'intermédiaire de la tige de commande couplée à la pédale de frein, et le temps nécessaire pour déplacer le piston primaire dans le maître-cylindre jusqu'au point où une pression hydraulique est effectivement créée dans le maître-cylindre, ce qui représente encore quelques dizaines de millisecondes. L'obtention d'une pression hydraulique dans la ou les chambres de liquide de freinage du maître-cylindre suppose notamment de fermer les conduits ou clapets de compensation qui servent à assurer que cette ou ces chambres reviennent toujours à la pression atmosphérique au repos.

La présente invention a pour but de proposer un système de commande du type précité qui réduise le temps nécessaire à l'exécution d'un freinage, notamment dans les situations d'urgence et notamment lorsque le véhicule à freiner roule initialement à vitesse élevée avec la pédale d'accélération enfoncée (ou le moyen de commande des gaz activé, quel que soit son type).

Pour cela, l'invention fournit un système de commande pour des freins de véhicule, comportant
un corps de maître-cylindre présentant un alésage dans lequel est agencé au moins un piston primaire mobile délimitant au moins une chambre à volume variable destinée à contenir un liquide de freinage,
et un amplificateur de force à différentiel de pression incluant une enceinte dont une paroi d'extrémité est liée audit corps de maître-cylindre, une cloison mobile qui sépare, dans ladite enceinte, une première chambre située du côté tourné vers ledit corps de maître-cylindre et apte à être reliée à une source d'air à pression basse extérieure à ladite enceinte d'une deuxième chambre située du côté opposé audit corps de maître-cylindre, une valve à trois voies pour relier sélectivement ladite deuxième chambre à ladite première chambre ou à une source d'air à pression haute extérieure à ladite enceinte, ladite valve à trois voies comportant un corps de valve solidaire de ladite cloison et couplé audit piston primaire pour lui transmettre une force motrice résultant d'un différentiel de pression s'exerçant sur ladite cloison lorsque ladite deuxième chambre est reliée à ladite source de pression haute, et
comporte un actionneur pneumatique présentant une chambre de travail munie d'une conduite d'entrée et d'un moyen de commutation électrique pour relier sélectivement ladite chambre de travail à ladite source de pression basse ou à ladite source de pression haute et un piston d'actionneur indépendant dudit corps de valve et couplé à l'un des éléments du groupe constitué dudit corps de maître-cylindre et dudit piston primaire pour que, lorsque ledit moyen de commutation met ladite chambre de travail en communication avec ladite source de pression haute, un différentiel de pression déplace ledit piston d'actionneur et ledit élément par rapport à l'autre desdits éléments dans un sens correspondant à la production d'une pression de liquide dans ladite au moins une chambre à volume variable.

Ainsi, l'actionneur pneumatique est apte à déplacer le piston primaire et le corps de maître-cylindre l'un par rapport à l'autre sur une certaine distance, par exemple de manière à fermer le conduit ou clapet de compensation de la chambre à volume variable, du moins de la chambre primaire dans le cas d'un maître-cylindre tandem, et à créer une petite pression hydraulique dans cette chambre, par exemple de l'ordre de 4 bar. Ainsi, au moins une partie du déplacement inefficace du piston primaire et donc une partie du travail inefficace de l'amplificateur de force sont pris en charge par l'actionneur pneumatique.

Un tel actionneur pneumatique présente en outre l'avantage de fonctionner avec les mêmes sources de pression que l'amplificateur de force à différentiel de pression, ce qui facilite l'installation et la connexion de l'actionneur à proximité immédiate de l'amplificateur de force en respectant les contraintes d'encombrement généralement sévères que l'on rencontre dans les véhicules automobiles. Le moyen de commutation électrique permet d'activer automatiquement et rapidement l'actionneur pneumatique au moment où un freinage est requis, ce qui permet de réduire considérablement le temps d'établissement de la pression hydraulique de freinage et donc la distance d'arrêt du véhicule.

De préférence, le moyen de commutation électrique est commandé par une unité de commande reliée à un capteur sensible à la position ou au déplacement d'un moyen de commande des gaz du véhicule, par exemple une pédale d'accélérateur, de manière à mettre la chambre de travail en communication avec la source de pression basse par défaut et à mettre la chambre de travail en communication avec la source de pression haute lorsqu'un relâchement du moyen de commande des gaz est détecté. Grâce à ce mode de commande du moyen de commutation, l'activation de l'actionneur pneumatique est réalisée de manière anticipée, par exemple dès que le conducteur relève le pied de la pédale d'accélérateur. Le moyen de commutation électrique est par exemple une électrovanne.

De préférence, le piston d'actionneur comporte une deuxième cloison mobile qui délimite la chambre de travail sous la forme d'une troisième chambre dans ladite enceinte. Ainsi, l'actionneur pneumatique est intégré dans l'enceinte de l'amplificateur de force, ce qui réduit l'encombrement du système.

Selon un mode de réalisation particulier, le piston d'actionneur est couplé au corps de maître-cylindre. Dans ce cas, la deuxième cloison sépare hermétiquement la première chambre de la troisième chambre qui est située du côté tourné vers le corps de maître-cylindre, le corps de maître-cylindre étant mobile en translation par rapport à ladite enceinte et solidaire de la deuxième cloison.

Avantageusement, la deuxième cloison est fixée à une portion d'extrémité du corps de maître-cylindre engagée de manière coulissante à travers la paroi d'extrémité de l'enceinte.

Selon un mode de réalisation particulier, le maître-cylindre porte une pièce de butée agencée à l'extérieur de ladite enceinte et apte à buter contre la paroi d'extrémité de l'enceinte pour limiter la course du corps de maître-cylindre vers l'intérieur de ladite enceinte.

Avantageusement, ladite enceinte présente une paroi cylindrique s'étendant parallèlement au corps de maître-cylindre depuis la paroi d'extrémité de l'enceinte, la deuxième cloison étant apte à se déplacer hermétiquement à l'intérieur de ladite paroi cylindrique.

Avantageusement, la paroi cylindrique porte un rebord orienté vers l'intérieur de ladite paroi cylindrique. De préférence, un ressort de rappel étant placé en appui entre ledit rebord et la deuxième cloison pour rappeler le corps de maître-cylindre vers l'extérieur de ladite enceinte. Un tel rebord peut aussi servir de pièce de butée pour limiter la course de la deuxième cloison vers l'intérieur de l'enceinte.

Selon un autre mode de réalisation particulier, le piston d'actionneur est couplé au piston primaire. Dans ce cas, une quatrième chambre apte à être reliée à ladite source de pression basse est définie entre ladite deuxième cloison et la paroi d'extrémité de l'enceinte tournée vers le corps de maître-cylindre, la troisième chambre étant définie de l'autre côté la deuxième cloison entre la deuxième cloison et une paroi intermédiaire fixe qui sépare la troisième chambre de la première chambre, ladite paroi intermédiaire présentant une ouverture dans laquelle un organe de sortie de force, par exemple une tige, peut coulisser de manière hermétique, le piston d'actionneur présentant un poussoir solidaire de la deuxième cloison agencé parallèlement audit organe de sortie de force entre la deuxième cloison et le piston primaire.

De préférence, ledit poussoir est creux et coulisse autour dudit organe de sortie de force.

Avantageusement, le poussoir porte une pièce de butée apte à buter contre ladite enceinte pour limiter la course du poussoir vers l'intérieur du corps de maître-cylindre.

Selon un mode de réalisation particulier, un ressort de rappel est placé dans la quatrième chambre en appui entre la paroi d'extrémité de l'enceinte et la deuxième cloison pour rappeler ladite deuxième cloison vers sa position de repos.

Avantageusement, l'organe de sortie de force présente au niveau de l'extrémité opposée au piston primaire une tête élargie munie d'un logement pour recevoir un disque de réaction en élastomères interposé entre une paroi de fond dudit logement et des portions d'extrémité respectives dudit corps de valve et d'un piston de valve engagées dans ledit logement. Avantageusement, ladite tête est engagée à travers l'ouverture de ladite paroi intermédiaire. Ainsi, le volume de l'enceinte est utilisé de manière optimale.

N'importe quel couple d'une source à pression basse et d'une source à pression haute peut être utilisé. De préférence, la source de pression haute est constituée de l'atmosphère ambiante, ladite pression basse étant inférieure à la pression atmosphérique. De préférence, la source de pression basse est constituée d'un circuit d'aspiration d'air d'un moteur à combustion interne du véhicule.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue schématique en coupe longitudinale d'un système de commande selon un premier mode de réalisation de l'invention, l'actionneur pneumatique étant dans un état inactif,
- la figure 2 est une vue schématique en coupe longitudinale d'un système de commande selon un deuxième mode de réalisation de l'invention, l'actionneur pneumatique étant dans un état actif,
- la figure 3 est une vue agrandie de la zone III de la figure 1.

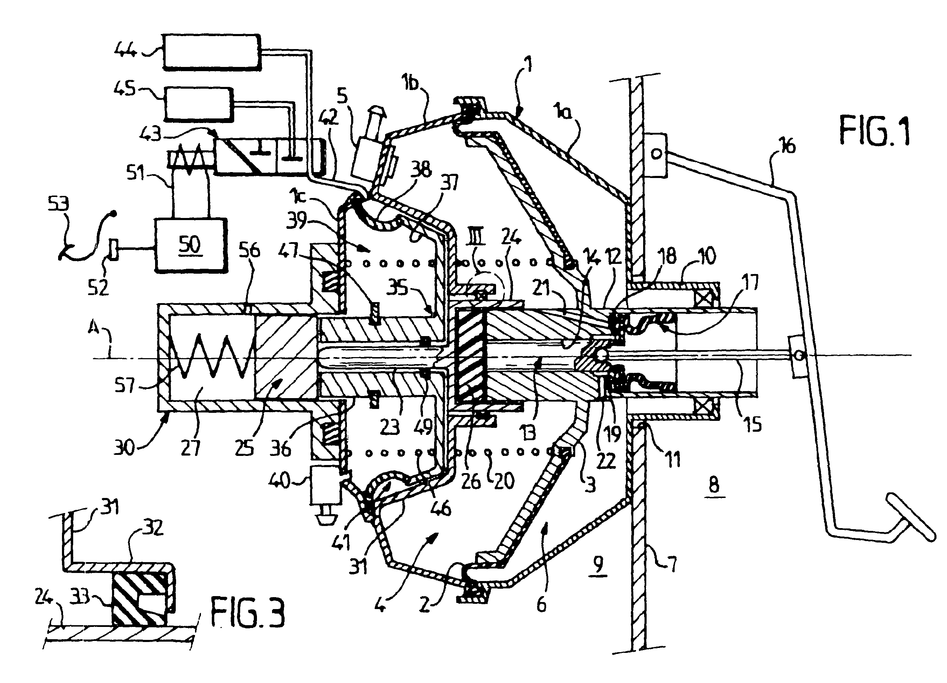

En référence à la figure 1, on décrit maintenant un premier mode de réalisation d'un système de commande hydraulique pour des freins de véhicule.

Ce système comporte un amplificateur de force à dépression qui comprend une enceinte 1 ayant une forme globale de révolution autour de l'axe A et qui est composée de trois parties 1a, 1b et 1c qui sont assemblées l'une à l'autre, par exemple par poinçonnage. Les parties la, 1b et 1c de l'enceinte 1 peuvent être fabriquées en tôle emboutie. Une membrane 2 portée par une cloison 3 sépare hermétiquement, dans le volume intérieur de l'enceinte 1, une chambre 4 reliée à une source d'air à pression basse (usuellement une pression inférieure à la pression atmosphérique) d'une chambre 6 pouvant être reliée sélectivement à la chambre 4 ou à une source d'air à pression relativement haute (usuellement la pression atmosphérique) par l'intermédiaire d'une valve à trois voies. La partie 1b de l'enceinte 1 est munie d'un raccord 5 par lequel la chambre 4 peut être reliée, via un tuyau approprié non montré, à un circuit d'aspiration d'air du moteur du véhicule qui constitue une source de dépression. La partie la de l'enceinte 1 est usuellement fixée par des moyens non montrés à une cloison 7 séparant l'habitacle 8 du véhicule par rapport au compartiment moteur 9. La partie arrière 1a de l'enceinte 1 comporte une extrémité tubulaire 10 qui passe à travers une ouverture 11 de la cloison 7 et qui débouche dans l'habitacle 8.

Dans l'enceinte 1, se trouve un corps de valve 12 de forme globalement cylindrique qui est réalisé d'un seul tenant avec la cloison 3 à laquelle est fixée la membrane 2 et qui est mobile axialement avec celle-ci dans l'enceinte 1. Le corps de valve 12 coulisse hermétiquement dans la partie tubulaire 10 de l'enceinte 1. La valve à trois voies susmentionnée est réalisée à l'aide d'un piston de valve 13 qui peut coulisser dans un alésage axial 14 du corps de valve 12 et peut être déplacé dans ledit alésage sous la commande d'une tige d'actionnement 15 reliée à la pédale de frein 16 du véhicule. La tige d'actionnement 15 et le piston de valve 13 présentent une position stable de repos montrée sur la figure 1 et des positions instables de travail vers la gauche dans la figure 1.

L'amplificateur de force comporte, en outre, un clapet caoutchouc 17 logé dans le corps de valve 12 et apte à coopérer avec des sièges d'étanchéité 18 et 19 prévus respectivement sur le corps de valve 12 et sur le piston de valve 13. Quand le piston de valve 13 est dans la position de repos, c'est-à-dire quand la pédale de frein 16 n'est pas enfoncée, le clapet 17 est en appui sur les sièges d'étanchéité 18 et 19 et les deux chambres 4 et 6 sont isolées l'une de l'autre. Quand le moteur du véhicule tourne, le piston de valve 13 étant toujours dans la position de repos, une dépression règne dans la chambre 4 de l'enceinte 1 et provoque un léger déplacement du corps de valve 12 vers la gauche contre l'action du ressort de rappel 20. Il en résulte que le siège d'étanchéité 18 s'écarte légèrement du clapet 17 et qu'une communication est établie entre les deux chambres 4 et 6 de l'enceinte 1 à travers des passages 21 et 22 formés dans le corps de valve 12.

Quand la pédale de frein 16 est enfoncée, la tige d'actionnement 15 pousse le piston de valve 13 vers l'avant dans l'alésage 14 du corps de valve 12. Dans ces conditions, le clapet 17 vient tout d'abord en contact avec le siège d'étanchéité 18 pour couper le communication entre les chambres 4 et 6 de l'enceinte 1, puis pendant que le piston de valve 13 poursuit son chemin vers l'avant dans l'alésage 14 sous la poussée de la tige d'actionnement 15, le siège d'étanchéité 19 s'écarte du clapet 17 établissant ainsi, via le passage 22, une communication entre la chambre 6 de l'enceinte 1 et l'habitacle 8 où règne la pression atmosphérique. Du fait de la différence de pression existant maintenant entre les chambres 4 et 6 de l'enceinte 1, la cloison 3 et le corps de valve 12 sont déplacés vers l'avant, c'est-à-dire vers la gauche dans la figure 1. On notera que l'expression « vers l'avant » est utilisée de manière conventionnelle pour désigner la gauche de la figure 1 et que cette direction correspond préférentiellement, mais pas nécessairement, à ce que l'on appelle « l'avant » dans le contexte d'un véhicule automobile.

L'amplificateur de force dont le fonctionnement décrit jusqu'ici est usuel comporte une tige de sortie de force 23 qui est couplée, en service, au piston primaire 25 logé dans le corps de maître-cylindre 30. En fonctionnement, lorsque la pédale de frein 16 est enfoncée et que le corps de valve 12 est déplacé vers l'avant sous l'action du différentiel de pression entre les chambres 4 et 6, le corps de valve 12 et le piston de valve 13 agissent ensemble sur la tige de sortie 23 par l'intermédiaire d'un disque de réaction 26 en matière élastomère qui est logé dans une tête tubulaire 24 de la tige de sortie 23. Il en résulte que la tige de sortie 23 transmet une force de sortie au piston primaire 25 qui va alors engendrer une pression hydraulique de commande dans la chambre de fluide de freinage 27.

On notera que le maître-cylindre schématisé sur la figure 1 est d'un type à piston unique mais qu'on utilise préférentiellement un maître-cylindre de type tandem en pratique. Sur les dessins, on a omis des éléments usuels des maîtres cylindres, comme le palier étanche monté à l'entrée de l'alésage.

La partie 1 c de l'enceinte 1 forme une paroi d'extrémité à laquelle le corps de maître-cylindre 30 est fixé de manière étanche. La partie 1b forme une paroi intermédiaire 31 dans l'enceinte 1. Un volume supplémentaire de l'enceinte 1 est ainsi défini entre la cloison 1c et la cloison intermédiaire 31. A son extrémité radialement intérieure, la cloison intermédiaire 31 se termine par une portion tubulaire 32 portant une coupelle d'étanchéité 33, mieux visible sur la figure 3, dans laquelle la tête 24 de la tige de sortie 23 coulisse de manière hermétique. Le volume supplémentaire de l'enceinte 1 est divisé de manière hermétique en deux chambres supplémentaires par un piston d'actionneur 35 qui comporte un poussoir creux cylindrique 36 pouvant coulisser hermétiquement autour de la tige de sortie 23 grâce à une bague d'étanchéité 49, une cloison 37 s'étendant radialement vers l'extérieur autour du poussoir 36 et une membrane annulaire déroulante en caoutchouc 38 dont le bord intérieur est lié hermétiquement à la cloison 37 et dont le bord extérieur est lié hermétiquement à la partie 1c de l'enceinte 1. La chambre 39 délimitée entre la partie 1c de l'enceinte 1 et la cloison 37 est reliée en fonctionnement au circuit d'aspiration d'air du véhicule par l'intermédiaire du connecteur 40 et de tuyaux non représentés. La chambre de travail 41 délimitée entre la cloison 37 et la paroi intermédiaire 31, c'est-à-dire derrière le piston d'actionneur 35, présente un conduit d'alimentation 42 sortant de l'enceinte 1, qui est muni d'une électrovanne 43 permettant de relier sélectivement la chambre de travail 41 à une source de pression basse 44 formée par exemple par le circuit d'aspiration d'air du moteur et à une source de pression haute 45 formée par exemple par l'atmosphère ambiante. L'électrovanne 43 est commandée par une unité de commande 50, par exemple le contrôleur ABS du véhicule ou un calculateur additionnel, par l'intermédiaire d'une ligne de commande 51. L'unité de commande 50 est reliée à un capteur 52 sensible au déplacement ou à la position de la pédale d'accélérateur 53 du véhicule.

Dans la chambre 39, on peut prévoir optionnellement un ressort de rappel 46 prenant appui sur la portion 1c de l'enceinte 1 et sur la cloison 37 pour rappeler le piston d'actionneur 35 dans sa position de repos représentée sur la figure 1. Par ailleurs, le poussoir 36 porte un circlips ou une rondelle 47 servant de pièce de butée apte à entrer en contact avec la surface intérieure de la portion 1c de l'enceinte 1 pour limiter le déplacement du poussoir 36 vers l'intérieur du corps de maître-cylindre 30 au bout de quelques millimètres lorsque la pression d'air haute est appliquée dans la chambre de travail 41.

Le piston d'actionneur 35 et le volume supplémentaire de l'enceinte 1 divisé en chambres 39 et 41 constituent un actionneur pneumatique qui permet d'agir sur le piston primaire 25 du corps de maître-cylindre indépendamment de la tige de sortie 23 de l'amplificateur de force à dépression. Le fonctionnement de cet actionneur est le suivant : lorsque aucun freinage d'urgence n'est requis, l'électrovanne 43 est dans sa position par défaut représentée sur la figure 1 et relie ainsi la chambre de travail 41 à la source de basse pression 44. Il règne ainsi une pression égale dans les chambres 39 et 41 et le piston d'actionneur 35 est donc maintenu dans sa position de repos, représentée sur la figure 1, par le ressort 46, si ce ressort est prévu ou, du moins, par le piston primaire 25 sur lequel agit un ressort de rappel 57. Tant que l'électrovanne 43 est dans cette position par défaut, le système de commande peut fonctionner de la manière usuelle, à la différence près que lorsque l'amplificateur de force de freinage est activé au moyen de la pédale de frein 16, la tige de sortie de force 23 entraîne passivement le piston d'actionneur 35. Dans ce mode de fonctionnement, le système de commande présente un temps de réponse qui souffre des défauts présentés en introduction.

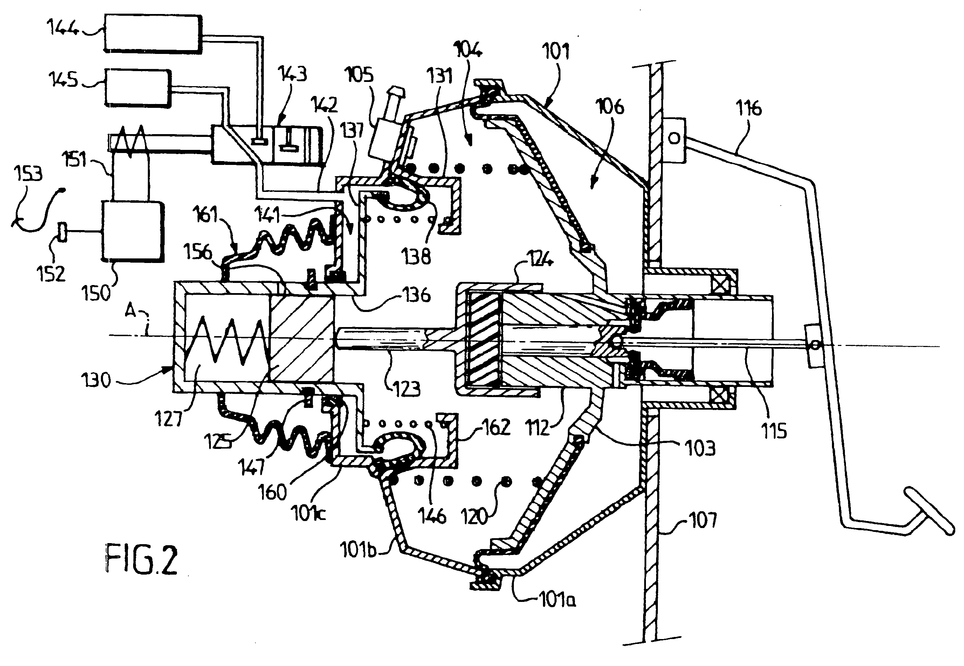

Pour réduire ce temps de réponse, on active l'électrovanne 43 au moyen de l'unité de commande 50 pour faire commuter l'électrovanne 43 dans la position active représentée sur la figure 2, cette position étant identique dans le mode de réalisation représenté sur la figure 1. Dans cette position active, l'électrovanne 43 met en communication la chambre de travail 41 avec la source de pression haute 45 de sorte qu'une force pneumatique agit sur le piston d'actionneur 35 et pousse celui-ci vers l'avant, indépendamment de la tige de sortie 23 autour de laquelle il coulisse librement. L'intensité de la poussée exercée par le piston d'actionneur 35 sur le piston primaire 25 peut être réglée par l'homme du métier en jouant sur le niveau de la pression haute et de la pression basse et sur la superficie de la cloison 37 et de la membrane 38. De préférence, la force pneumatique agissant sur le piston d'actionneur 35 est réglée pour déplacer le piston primaire 25 jusqu'à obturer le passage de compensation primaire 56 et créer dans la chambre de fluide de freinage 27 une petite pression hydraulique, par exemple de quelques bars. L'actionneur pneumatique effectue ainsi une pré-charge du piston primaire 25, même si le conducteur n'a pas encore eu le temps d'enfoncer suffisamment la pédale de frein 16 pour que la tige de sortie 23 agisse sur ce piston 25. Une fois cette pré-charge obtenue, le fonctionnement de l'amplificateur de force de freinage est classique : la force d'entrée exercée par le conducteur sur la pédale de frein 16 est transmise par le piston de valve 13, le disque de réaction 26 et la tige de sortie 23 au piston primaire 25. A cette force s'ajoute la force pneumatique qui s'exerce sur le corps de valve 12 et qui est également transmise par le disque de réaction 26 et la tige de sortie 23.

En référence à la figure 2, on décrit maintenant un deuxième mode de réalisation du système de commande de freinage. Sur la figure 2, les éléments similaires ou identiques à ceux du premier mode de réalisation sont désignés par le même chiffre de référence augmenté du nombre 100. On ne décrit ci-dessous que les éléments qui diffèrent du premier mode de réalisation.

Dans le deuxième mode de réalisation, le corps de maître-cylindre 130 présente une portion d'extrémité 136 qui est engagée de manière coulissante dans l'enceinte 101 de l'amplificateur de force de freinage à travers la paroi d'extrémité 101c de cette enceinte. Une bague d'étanchéité 160 est fixée à la paroi 101 c autour du corps de maître-cylindre 130. Contrairement au premier mode de réalisation, il n'y a pas ici de cloison intermédiaire coopérant de manière hermétique avec la tête 124 de la tige de sortie. Le piston de l'actionneur pneumatique est, dans ce cas, formé par une cloison 137 s'étendant radialement vers l'extérieur depuis la portion d'extrémité 136 à laquelle elle est fixée et par une membrane annulaire déroulante 138 en caoutchouc qui est liée hermétiquement à la cloison 137 au niveau de son bord intérieur et à la paroi de l'enceinte 101 au niveau de son bord extérieur, de manière à séparer hermétiquement la chambre 104 située entre les cloisons 103 et 137 d'une chambre de travail 141 définie entre la paroi 10 1 c de l'enceinte 101 et la cloison 137. A partir de la paroi d'extrémité traversée par le corps de maître-cylindre 130, la partie 101c de l'enceinte présente une forme cylindrique et s'étend parallèlement à l'axe A autour de la cloison 137. Dans le prolongement de cette paroi extérieure cylindrique de l'enceinte, la partie 101b forme une paroi intérieure cylindrique 131 repliée en saillie vers l'intérieur de l'enceinte 101 dans la chambre 104. Au niveau de son extrémité arrière, la paroi cylindrique 131 présente un rebord 162 replié vers l'intérieur perpendiculairement. Un ressort de rappel 146 prend appui entre la surface avant du rebord 162 et la surface arrière de la cloison 137 pour rappeler le corps de maître-cylindre vers une position de repos.

On décrit maintenant le fonctionnement du système de commande dans le deuxième mode de réalisation. La chambre de travail 141 est reliée sélectivement à une source de pression basse 144 ou à une source de pression haute 145 par l'intermédiaire d'un conduit d'alimentation 142 et d'une électrovanne 143 dont le fonctionnement est identique au premier mode de réalisation. Lorsque l'électrovanne 143 est dans sa position par défaut représentée sur la figure 1, qui est identique dans le deuxième mode de réalisation, il règne une pression basse égale dans la chambre de travail 141 et dans la chambre 104 de l'enceinte 101, de sorte qu'aucune force pneumatique n'est exercée sur la cloison 137 et la membrane 138. Dans ces conditions, le ressort de rappel 146 maintient le corps de maître-cylindre dans sa position de repos, non représentée, dans laquelle la cloison 137 est par exemple en butée contre l'enceinte 101. Dans ce cas, le fonctionnement de l'amplificateur de force à différentiel de pression est usuel.

Lorsqu'un freinage d'urgence est requis, on commute l'électrovanne 143 dans la position active représentée sur la figure 2, ce qui met la chambre de travail 141 en communication avec la source d'air à pression atmosphérique 145. Une force pneumatique s'exerce sur la cloison 137 et la membrane 138 de manière à déplacer le corps de maître-cylindre en direction de l'intérieur de l'enceinte 101 de l'amplificateur de force. Le piston primaire 125 coopère alors avec la tige de sortie 123, même si le conducteur n'a pas encore eu le temps d'appuyer sur la pédale de frein 116, ce qui déplace le piston primaire 125 vers l'intérieur de la chambre de fluide de freinage 127 en obturant le passage de compensation 156. De même que dans le premier mode de réalisation, on règle l'intensité de la force de pré-charge pneumatique qui s'exerce sur le corps de maître-cylindre 130 en réglant les pressions haute et basse par exemple en contrôlant le temps de remplissage de la chambre de travail 141, ou en réglant la section du piston d'actionneur formé par la cloison 137 et la membrane déroulante 138. On peut aussi jouer sur le volume total à remplir dans le volume supplémentaire de l'enceinte. Sur la figure 2, le corps de maître-cylindre 130 a effectué une course suffisante pour assurer l'obturation du passage de compensation 156 et générer une petite pression hydraulique dans la chambre 127. Pour limiter la possibilité de mouvement du corps de maître-cylindre 130 vers l'intérieur de l'enceinte 101 à quelques millimètres, un circlips ou une rondelle 147 est fixé sur le pourtour du corps de maître-cylindre 130. On prévoit également un soufflet en caoutchouc 161 autour du corps de maître-cylindre 130 avec une extrémité liée à la paroi d'extrémité 101 c de l'enceinte 101 afin d'empêcher la pénétration d'impuretés dans l'enceinte 101.

Dans les deux modes de réalisation, l'actionneur pneumatique sert à créer une force de pré-charge qui s'exerce soit sur le piston primaire dans le premier mode de réalisation, soit sur le corps de maître-cylindre dans le deuxième mode de réalisation, et qui, à chaque fois, crée un déplacement mutuel entre ces éléments pour obtenir une petite pression hydraulique dans la chambre de fluide primaire 127 ou 27. Cette pressurisation initiale économise un peu du travail normalement effectué par le conducteur et réduit considérablement le temps de réponse du système. Il est particulièrement utile de déclencher cette pré-charge lorsqu'un freinage d'urgence est requis. Pour cela, on programme l'unité de commande 50 ou 150 de manière à commuter l'électrovanne 43 ou 143 dans sa position active représentée sur la figure 2 dès qu'un déplacement de la pédale d'accélérateur 53 ou 153 est détecté dans le sens d'une décélération du véhicule, c'est-à-dire un lever de pédale d'accélérateur. Toutefois, d'autres indicateurs que la pédale d'accélérateur peuvent être utilisés pour détecter qu'un freinage est requis et déclencher la commutation de l'électrovanne.

Typiquement le temps de commutation de l'électrovanne 43 ou 143 est d'environ une à deux dizaines de millisecondes, du moins pour un modèle d'électrovanne courant disponible dans le commerce.

De préférence, l'actionneur pneumatique est dimensionné de manière que le volume de sa chambre de travail 41 ou 141 soit inférieur au volume de la chambre de travail 6 ou 106 de l'amplificateur de force, par exemple égal environ au quart de ce volume. Dans ce cas, le temps de remplissage de la chambre de travail 41 ou 141, c'est-à-dire le temps de réponse de l'actionneur est estimé à 50 ms au maximum. On économise finalement au moins 100 à 150 ms sur le freinage complet, ce qui équivaut à réduire la distance d'arrêt du véhicule de 3 à 4 m pour une vitesse initiale de 120 km/h (30 m/s).

## Revendications

1. Système de commande pour des freins de véhicule, comportant
un corps de maître-cylindre (30, 130) présentant un alésage dans lequel est agencé au moins un piston primaire (25, 125) mobile délimitant au moins une chambre à volume variable (27, 127) destinée à contenir un liquide de freinage,
et un amplificateur de force à différentiel de pression incluant une enceinte (1, 101) dont une paroi d'extrémité (1c, 101c) est liée audit corps de maître-cylindre, une cloison mobile (3, 103) qui sépare, dans ladite enceinte, une première chambre (4, 104) située du côté tourné vers ledit corps de maître-cylindre et apte à être reliée à une source d'air à pression basse extérieure à ladite enceinte d'une deuxième chambre (6, 106) située du côté opposé audit corps de maître-cylindre, une valve à trois voies pour relier sélectivement ladite deuxième chambre à ladite première chambre ou à une source d'air à pression haute (8) extérieure à ladite enceinte, ladite valve à trois voies comportant un corps de valve (12, 112) solidaire de ladite cloison et couplé audit piston primaire pour lui transmettre une force motrice résultant d'un différentiel de pression s'exerçant sur ladite cloison lorsque ladite deuxième chambre est reliée à ladite source de pression haute,
un actionneur pneumatique présentant une chambre de travail (41, 141) munie d'une conduite d'entrée (42, 142) et d'un moyen de commutation électrique (43, 143) pour relier sélectivement ladite chambre de travail à ladite source de pression basse (44, 144) ou à ladite source de pression haute (45, 145) et un piston d'actionneur (35, 137) indépendant dudit corps de valve et couplé à l'un des éléments du groupe constitué dudit corps de maître-cylindre et dudit piston primaire pour que, lorsque ledit moyen de commutation met ladite chambre de travail en communication avec ladite source de pression haute, un différentiel de pression déplace ledit piston d'actionneur et ledit élément par rapport à l'autre desdits éléments dans un sens correspondant à la production d'une pression de liquide dans ladite au moins une chambre à volume variable,
**caractérisé par le fait qu**'il comporte une pièce de butée (47, 147) couplée audit piston d'actionneur (35, 137) et apte à buter contre ladite enceinte (1, 101) pour limiter la course du piston d'actionneur par rapport à ladite enceinte, ledit corps de valve étant couplé audit piston primaire par un organe de sortie de force (23-24, 123-124) qui traverse ledit piston d'actionneur (35, 137).

2. Système de commande hydraulique selon la revendication 1, **caractérisé par le fait que** ledit moyen de commutation électrique est commandé par une unité de commande (50, 150) reliée à un capteur (52, 152) sensible à la position ou au déplacement d'un moyen de commande des gaz (53, 153) du véhicule, de manière à mettre ladite chambre de travail en communication avec ladite source de pression basse par défaut et à mettre ladite chambre de travail en communication avec ladite source de pression haute lorsqu'un relâchement dudit moyen de commande des gaz est détecté.

3. Système de commande hydraulique selon la revendication 1 ou 2, **caractérisé par le fait que** ledit piston d'actionneur comporte une deuxième cloison mobile (37, 137) qui délimite ladite chambre de travail sous la forme d'une troisième chambre (41, 141) dans ladite enceinte.

4. Système de commande hydraulique selon la revendication 3, **caractérisé par le fait que** ladite deuxième cloison (137) sépare hermétiquement ladite première chambre (104) de ladite troisième chambre (141) qui est située du côté tourné vers ledit corps de maître-cylindre, ledit corps de maître-cylindre (130) étant mobile en translation par rapport à ladite enceinte (101) et solidaire de ladite deuxième cloison.

5. Système de commande hydraulique selon la revendication 4, **caractérisé par le fait que** ladite deuxième cloison est fixée à une portion d'extrémité (136) dudit corps de maître-cylindre engagée de manière coulissante à travers ladite paroi d'extrémité (101c) de l'enceinte.

6. Système de commande hydraulique selon la revendication 5, **caractérisé par le fait que** ladite pièce de butée (147) est agencée à l'extérieur de ladite enceinte, portée par ledit corps de maître-cylindre et apte à buter contre ladite paroi d'extrémité de l'enceinte pour limiter la course du corps de maître-cylindre vers l'intérieur de ladite enceinte.

7. Système de commande hydraulique selon l'une des revendications 4 à 6, **caractérisé par le fait que** ladite enceinte présente une paroi cylindrique (101c, 131) s'étendant parallèlement audit corps de maître-cylindre depuis ladite paroi d'extrémité de l'enceinte, ladite deuxième cloison étant apte à se déplacer hermétiquement à l'intérieur de ladite paroi cylindrique.

8. Système de commande hydraulique selon la revendication 7, **caractérisé par le fait que** ladite paroi cylindrique (131) porte un rebord (162) orienté vers l'intérieur de ladite paroi cylindrique, un ressort de rappel (146) étant placé en appui entre ledit rebord et ladite deuxième cloison pour rappeler ledit corps de maître-cylindre vers l'extérieur de ladite enceinte.

9. Système de commande hydraulique selon la revendication 3, **caractérisé par le fait qu'**une quatrième chambre (39) apte à être reliée à ladite source de pression basse est définie entre ladite deuxième cloison (37) et la paroi d'extrémité (1c) de l'enceinte tournée vers le corps de maître-cylindre, ladite troisième chambre (41) étant définie de l'autre côté ladite deuxième cloison entre ladite deuxième cloison et une paroi intermédiaire fixe (31) qui sépare ladite troisième chambre de ladite première chambre (4), ladite paroi intermédiaire présentant une ouverture dans laquelle ledit organe de sortie de force (24) peut coulisser de manière hermétique, ledit piston d'actionneur présentant un poussoir (36) solidaire de ladite deuxième cloison agencé parallèlement audit organe de sortie de force entre ladite deuxième cloison et ledit piston primaire (25).

10. Système de commande hydraulique selon la revendication 9, **caractérisé par le fait que** ledit poussoir (36) est creux et coulisse autour dudit organe de sortie de force (23).

11. Système de commande hydraulique selon la revendication 9 ou 10, **caractérisé par le fait que** ladite pièce de butée (47) est portée par ledit poussoir et apte à buter contre ladite enceinte pour limiter la course dudit poussoir vers l'intérieur dudit corps de maître-cylindre.

12. Système de commande hydraulique selon l'une des revendications 9 à 11, **caractérisé par le fait qu**'un ressort de rappel (46) est placé dans la quatrième chambre en appui entre la paroi d'extrémité de l'enceinte et ladite deuxième cloison pour rappeler ladite deuxième cloison vers sa position de repos.

13. Système de commande hydraulique selon l'une des revendications 9 à 12, **caractérisé par le fait que** ledit organe de sortie de force (23, 123) présente au niveau de l'extrémité opposée audit piston primaire une tête élargie (24, 124) munie d'un logement pour recevoir un disque de réaction en élastomères (26) interposé entre une paroi de fond dudit logement et des portions d'extrémité respectives dudit corps de valve (12) et d'un piston de valve (13) engagées dans ledit logement, ladite tête étant engagée à travers l'ouverture de ladite paroi intermédiaire.

14. Système de commande hydraulique selon l'une des revendications 1 à 13, **caractérisé par le fait que** ladite source de pression haute (45, 145) est constituée de l'atmosphère ambiante, ladite pression basse (44, 144) étant inférieure à la pression atmosphérique.

15. Système de commande hydraulique selon la revendication 14, **caractérisé par le fait que** ladite source de pression basse (44, 144) est constituée d'un circuit d'aspiration d'air d'un moteur à combustion interne.

## Claims

1. Control system for vehicle brakes, comprising
a master cylinder body (30, 130) with a bore in which is arranged at least one mobile primary piston (25, 125) delimiting at least one variable volume chamber (27, 127) designed to contain a brake fluid,
and a pressure differential force amplifier comprising an enclosure (1, 101), of which one end wall (1c, 101c) is connected to said master cylinder body, a mobile partition (3, 103) which, within said enclosure, separates a first chamber (4, 104), situated on the side facing said master cylinder body and capable of being connected to a low pressure air source outside said enclosure, from a second chamber (6, 106) situated on the opposite side of said master cylinder body, a three-way valve for selectively connecting said second chamber to said first chamber or a high pressure air source (8) outside said enclosure, said three-way valve comprising a valve body (12, 112) integral with said partition and coupled to said primary piston so as to transmit thereto a driving force resulting from a pressure differential acting on said partition when said second chamber is connected to said high pressure source,
a pneumatic actuator having a working chamber (41, 141) provided with an inlet line (42, 142) and an electrical switching means (43, 143) for selectively connecting said working chamber to said low pressure source (44, 144) or to said high pressure source (45, 145) and an actuator piston (35, 137) independent of said valve body and coupled to one of the members of the group consisting of said master cylinder body and said primary piston so that, when said switching means puts said working chamber in communication with said high pressure source, a pressure differential displaces said actuator piston and said member relative to the other one of said members in a direction corresponding to the production of a fluid pressure in said at least one variable volume chamber,
**characterized in that** it comprises an abutment element (47, 147) coupled to said actuator piston (35, 137) and capable of abutting against said enclosure (1, 101) to limit the travel of the actuator piston relative to said enclosure, said valve body being coupled to said primary piston by a force output member (23-24, 123-124) which passes through said actuator piston (35, 137).

2. Hydraulic control system according to Claim 1, **characterized in that** said electrical switching means is controlled by a control unit (50, 150) connected to a sensor (52, 152) sensitive to the position or displacement of a vehicle throttle control means (53, 153), in such a way as to put said working chamber in communication by default with said low pressure source and to put said working chamber in communication with said high pressure source when release of said throttle control means is detected.

3. Hydraulic control system according to Claim 1 or 2, **characterized in that** said actuator piston comprises a second mobile partition (37, 137) which delimits said working chamber in the form of a third chamber (41, 141) in said enclosure.

4. Hydraulic control system according to Claim 3, **characterized in that** said second partition (137) hermetically separates said first chamber (104) from said third chamber (141), which is situated on the side facing said master cylinder body, said master cylinder body (130) being translationally mobile relative to said enclosure (101) and integral with said second partition.

5. Hydraulic control system according to Claim 4, **characterized in that** said second partition is fixed to an end portion (136) of said master cylinder body engaged so as to slide through said end wall (101c) of the enclosure.

6. Hydraulic control system according to Claim 5, **characterized in that** said abutment element (147) is arranged outside said enclosure, is borne by said master cylinder body and is capable of abutting against said end wall of the enclosure so as to limit the travel of the master cylinder body towards the inside of said enclosure.

7. Hydraulic control system according to one of Claims 4 to 6, **characterized in that** said enclosure has a cylindrical wall (101c, 131) extending parallel to said master cylinder body from said end wall of the enclosure, said second partition being capable of moving hermetically inside said cylindrical wall.

8. Hydraulic control system according to Claim 7, **characterized in that** said cylindrical wall (131) bears a rim (162) oriented towards the inside of said cylindrical wall, a return spring (146) being positioned so as to bear between said rim and said second partition to return said master cylinder body towards the outside of said enclosure.

9. Hydraulic control system according to Claim 3, **characterized in that** a fourth chamber (39) capable of being connected to said low pressure source is defined between said second partition (37) and the end wall (1c) of the enclosure facing the master cylinder body, said third chamber (41) being defined on the other side of said second partition between said second partition and a fixed intermediate wall (31) which separates said third chamber from said first chamber (4), said intermediate wall having an opening in which said force output member (24) may slide hermetically, said actuator piston having a pusher means (36) integral with said second partition and arranged parallel to said force output member between said second partition and said primary piston (25).

10. Hydraulic control system according to Claim 9, **characterized in that** said pusher means (36) is hollow and slides around said force output member (23).

11. Hydraulic control system according to Claim 9 or 10, **characterized in that** said abutment element (47) is borne by said pusher means and is capable of abutting against said enclosure to limit the travel of said pusher means towards the inside of said master cylinder body.

12. Hydraulic control system according to one of Claims 9 to 11, **characterized in that** a return spring (46) is positioned in the second chamber so as to bear between the end wall of the enclosure and said second partition to return said second partition towards its rest position.

13. Hydraulic control system according to one of Claims 9 to 12, **characterized in that**, at the level of the opposite end to said primary piston, said force output member (23, 123) has a widened head (24, 124) provided with a receptacle for receiving an elastomeric reaction disc (26) interposed between a bottom wall of said receptacle and respective end portions, of said valve body (12) and of a valve piston (13), engaged in said receptacle, said head being engaged through the opening in said intermediate wall.

14. Hydraulic control system according to one of Claims 1 to 13, **characterized in that** said high pressure source (45, 145) consists of the ambient atmosphere, said low pressure (44, 144) being lower than atmospheric pressure.

15. Hydraulic control system according to Claim 14, **characterized in that** said low pressure source (44, 144) consists of an air intake circuit of an internal combustion engine.

## Patentansprüche

1. Steuerungssystem für Fahrzeugbremsen mit
einem Hauptzylinderkörper (30, 130), der eine Bohrung aufweist, in welcher wenigstens ein beweglicher Primärkolben (25, 125) angeordnet ist, der wenigstens eine Kammer mit variablem Volumen (27, 127) begrenzt, welche zur Aufnahme einer Bremsflüssigkeit dient, und einem Differenzdruck-Kraftverstärker, der eine Einfassung (1, 101), deren eine Endwand (1c, 101c) mit dem Hauptzylinderkörper verbunden ist, eine bewegliche Trennwand (3, 103), welche in der Einfassung eine erste Kammer (4, 104), die sich auf der zu dem Hauptzylinderkörper gerichteten Seite befindet und mit einer außerhalb der Einfassung befindlichen Quelle von Luft mit niederem Druck verbunden werden kann, von einer zweiten Kammer (6, 106) trennt, die auf der dem Hauptzylinderkörper gegenüberliegenden Seite angeordnet ist, und ein Drei-Wege-Ventil zur selektiven Verbindung der zweiten Kammer mit der ersten Kammer oder einer außerhalb der Einfassung befindlichen Quelle von Luft mit hohem Druck (8) umfasst, wobei das Drei-Wege-Ventil einen Ventilkörper (12, 112) aufweist, der mit der Trennwand verbunden und mit dem Primärkolben gekoppelt ist, um auf ihn eine Antriebskraft zu übertragen, die aus einem Druckunterschied resultiert, der auf die Trennwand ausgeübt wird, wenn die zweite Kammer mir der Hochdruckquelle verbunden ist, einem pneumatischen Stellglied, welches eine Arbeitskammer (41, 141) aufweist, die mit einer Eingangsleitung (42, 142) und einem elektrischen Kommutationsmittel (43 143) versehen ist, um die Arbeitskammer selektiv mit der Niederdruckquelle (44, 144) oder der Hochdruckquelle (45, 145) zu verbinden, sowie einem Stellkolben (35, 137), der von dem Ventilkörper unabhängig ist und mit einem der Elemente der den Hauptzylinderkörper und den Primärkolben bildenden Gruppe gekoppelt ist, damit dann, wenn das Kommutationsmittel eine kommunizierende Verbindung zwischen der Arbeitskammer und der Hochdruckquelle herstellt, ein Druckunterschied den Stellkolben und das Element bezüglich der anderen Elemente in eine Richtung verschiebt, die der Erzeugung eines Flüssigkeitsdrucks in der wenigstens einen Kammer mit variablem Volumen entspricht, **dadurch gekennzeichnet, dass** es ein Anschlagteil (47, 147) aufweist, das mit dem Stellkolben (35, 137) gekoppelt ist und gegen die Einfassung (1, 101) in Anschlag kommen kann, um den Hub des Stellkolbens bezüglich der Einfassung zu begrenzen, wobei der Ventilkörper mit dem Primärkolben über ein Kraftausleitungselement (23-24, 123-124) gekoppelt ist, welches den Stellkolben (35, 137) durchquert.

2. Hydraulisches Steuerungssystem gemäß Anspruch 1, **dadurch gekennzeichnet, dass** das elektrische Kommutationsmittel von einer Steuereinheit (50, 150) gesteuert wird, die mit einem Sensor (52, 152) verbunden ist, der die Position oder die Verschiebung eines Gassteuerungsmittels (53, 153) registrieren kann, so dass standardmäßig eine kommunizierende Verbindung der Arbeitskammer mit der Niederdruckquelle und, wenn eine Freigabe des Gassteuerungsmittels detektiert wird, eine kommunizierende Verbindung der Arbeitskammer mit der Hochdruckquelle hergestellt werden kann.

3. Hydraulisches Steuerungssystem gemäß Anspruch 1 oder 2, **dadurch gekennzeichnet, dass** der Stellkolben eine zweite bewegliche Trennwand (37, 137) aufweist, welche die Arbeitskammer in Form einer dritten Kammer (41, 141) in der Einfassung begrenzt.

4. Hydraulisches Steuerungssystem gemäß Anspruch 3, **dadurch gekennzeichnet, dass** die zweite Trennwand (137) die erste Kammer (104) hermetisch von der dritten, auf der zum Hauptzylinderkörper gerichteten Seite befindlichen Kammer (141) trennt, wobei der Hauptzylinderkörper (130) bezüglich der Einfassung (101) verschiebbar und mit der zweiten Trennwand verbunden ist.

5. Hydraulisches Steuerungssystem gemäß Anspruch 4, **dadurch gekennzeichnet, dass** die zweite Trennwand an einem Endabschnitt (136) des Hauptzylinderkörpers fixiert ist, der durch die Endwand (101 c) der Einfassung hindurch verschiebbar angeordnet ist.

6. Hydraulisches Steuerungssystem gemäß Anspruch 5, **dadurch gekennzeichnet, dass** das Anschlagteil (147) außerhalb der Einfassung angeordnet ist, von dem Hauptzylinderkörper getragen wird und gegen die Endwand der Einfassung in Anschlag kommen kann, um den Hub des Hauptzylinderkörpers ins Innere der Einfassung hinein zu begrenzen.

7. Hydraulisches Steuerungssystem gemäß einem der Ansprüche 4 bis 6, **dadurch gekennzeichnet, dass** die Einfassung eine zylindrische Wand (101c, 131) aufweist, die ausgehend von der Endwand der Einfassung parallel zu dem Hauptzylinderkörper verläuft, wobei sich die zweite Trennwand hermetisch im Inneren der zylindrischen Wand verschieben kann.

8. Hydraulisches Steuerungssystem gemäß Anspruch 7, **dadurch gekennzeichnet, dass** die zylindrische Wand (131) eine ins Innere der zylindrischen Wand orientierten Rand (162) aufweist, wobei ein Rückstellfeder (146) in Anlage zwischen dem Rand und der zweiten Trennwand angeordnet ist, um den Hauptzylinderkörper nach außen aus der Einfassung zurückzustellen.

9. Hydraulisches Steuerungssystem gemäß Anspruch 3, **dadurch gekennzeichnet, dass** eine mit der Niederdruckquelle verbindbare vierte Kammer (39) zwischen der zweiten Trennwand (37) und der Endwand (1c) der in Richtung Hauptzylinderkörper gerichteten Einfassung definiert ist, wobei die dritte Kammer (41) auf der anderen Seite der zweiten Trennwand zwischen der zweiten Trennwand und einer feststehenden Zwischenwand (31), welche die dritte Kammer von der ersten Kammer (4) trennt, definiert ist, wobei die Zwischenwand eine Öffnung aufweist, in welcher das Kraftausleitungselement (24) hermetisch verschiebbar ist, wobei der Stellkolben einen mit der zweiten Trennwand verbundenen Stößel (36) aufweist, der parallel zu dem Kraftausleitungselement zwischen der zweiten Trennwand und dem Primärkolben (25) angeordnet ist.

10. Hydraulisches Steuerungssystem gemäß Anspruch 9, **dadurch gekennzeichnet, dass** der Stößel (36) hohl ist und das Kraftausleitungselement (23) verschiebbar umgibt.

11. Hydraulisches Steuerungssystem gemäß Anspruch 9 oder 10, **dadurch gekennzeichnet, dass** das Anschlagteil (47) von dem Stößel getragen wird, und gegen die Einfassung in Anschlag kommen kann, um den Hub des Stößels ins Innere des Hauptzylinderkörpers hinein zu begrenzen.

12. Hydraulisches Steuerungssystem gemäß einem der Ansprüche 9 bis 11, **dadurch gekennzeichnet, dass** eine Rückstellfeder (46) in der vierten Kammer in Anlage zwischen der Endwand der Einfassung und der zweiten Trennwand angeordnet ist, um die zweite Trennwand in Richtung ihrer Ruheposition zurückzustellen.

13. Hydraulisches Steuerungssystem gemäß einem der Ansprüche 1 bis 12, **dadurch gekennzeichnet, dass** das Kraftausleitungselement (23, 123) auf Höhe des dem Primärkolben gegenüberliegenden Endes einen vergrößerten Kopf (24, 124) aufweist, der mit einer Ausnehmung zur Aufnahme einer elastomeren Reaktionsscheibe (26) versehen ist, die zwischen einer Bodenwand der Ausnehmung und jeweiligen in die Ausnehmung eingreifenden Endabschnitten des Ventilkörpers (12) bzw. eines Ventilkolbens (13) angeordnet ist, wobei der Kopf durch die Öffnung der Zwischenwand hindurch greifend angeordnet ist.

14. Hydraulisches Steuerungssystem gemäß einem der Ansprüche 1 bis 13, **dadurch gekennzeichnet, dass** die Hochdruckquelle (45, 145) von der umgebenden Atmosphäre gebildet wird, während der niedere Druck (44, 144) geringer als der Atmosphärendruck ist.

15. Hydraulisches Steuerungssystem gemäß Anspruch 14, **dadurch gekennzeichnet, dass** die Niederdruckquelle (44, 144) von einem Luftansaugkreislauf eines Verbrennungsmotors gebildet wird.
